# FASCICULE DE BREVET EUROPEEN

(11) **EP 0 485 283 B1**
(45) Date de publication et mention de la délivrance du brevet: **04.08.1993**
(21) Numéro de dépôt: 91402971.5
(22) Date de dépôt: 06.11.1991
(51) Int. Cl.: H02K 49/04, F16D 65/847

(54) **Rotor induit de ralentisseur électromagnétique, procédés et dispositifs de fabrication**
Anker eines elektromagnetischen Verzögerers, Verfahren und Vorrichtung zu dessen Herstellung
Rotor of an electromagnetic brake, method and device for its fabrication

(30) Priorité: 09.11.1990 FR 9013927
(43) Date de publication de la demande: 13.05.1992
(73) Titulaire: LABAVIA S.G.E., F-78180 Montigny le Bretonneux (FR)
(72) Inventeur: Estaque, Michel, F-95159 Taverny (FR); Bardon, Olivier, F-95000 Cergy (FR)
(74) Mandataire: Behaghel, Pierre

(56) Documents cités:
- EP-A- 0 209 460
- EP-A- 0 330 562
- DE-A- 3 740 309
- FR-A- 2 272 302

## Description

L'invention est relative aux rotors induits des ralentisseurs électromagnétiques, notamment pour véhicules, rotors comprenant au moins un disque en matériau ferromagnétique propre à défiler en regard d'une couronne statorique de pôles électromagnétiques alternativement positifs et négatifs dont il n'est séparé que par un entrefer, ce disque étant alors freiné et échauffé du fait de la création de courants de Foucault dans sa masse.

Elle vise plus particulièrement, parmi ces rotors, ceux pour lesquels la face du disque opposée à l'entrefer est raccordée à une pluralité d'ailettes, chaque ailette s'étendant axialement à partir de ladite face et étant délimitée par deux faces parallèles ou sensiblement telles, inclinées sur les rayons correspondants du rotor, les crêtes de ces ailettes étant raccordées entre elles par une joue annulaire et l'ensemble du disque, des ailettes et de la joue étant constitué en un seul bloc moulé en matériau ferromagnétique.

Chaque ailette peut s'étendre d'un seul tenant continu depuis un bord interne situé au voisinage de la surface cylindrique contenant le bord interne du disque à un bord externe situé au voisinage de la surface cylindrique contenant le bord externe de ce disque.

Mais dans des modes de réalisation avantageux faisant l'objet du brevet FRANCE n° 85 10654 de la demanderesse, chaque ailette est décomposée en plusieurs tronçons ou ailettes élémentaires qui peuvent être décalés transversalement les uns des autres par rapport aux trajectoires de l'air de ventilation de façon à améliorer la turbulence de cet air sans augmenter de façon gênante les pertes de charge, les différentes ailettes élémentaires étant alors de préférence régulièrement réparties selon des "couronnes" concentriques.

L'invention vise également les procédés et dispositifs de fabrication des rotors considérés.

L'évacuation des calories engendrées dans le disque d'un tel rotor par les courants de Foucault, lors de la mise en service du ralentisseur équipé de ce rotor, se fait essentiellement par conduction, rayonnement et convection à partir du disque, des ailettes et de la joue, la convection étant fortement renforcée par ventilation : en effet la présence des ailettes fait jouer au rotor un rôle de ventilateur en balayant par un courant d'air de refroidissement les surfaces chaudes à refroidir.

Dans les modes de réalisation connus, les ailettes sont relativement épaisses et peu nombreuses.

En effet les rotors considérés sont généralement fabriqués par un procédé de coulée dans des moules en sable, lequel procédé ne permet pas de réaliser des ailettes d'épaisseur inférieure à 7 mm ; en pratique, dans les réalisations connues, les rotors présentant un diamètre extérieur de l'ordre de 500 mm comportent un nombre d'ailettes identiques égal à 8 ou 16 et au maximum à 24 pour chaque "couronne" considérée.

Pour augmenter la capacité d'évacuation calorifique d'un tel rotor de ralentisseur, et donc augmenter la valeur du couple à chaud engendré par cet appareil, sans pour autant accroître de façon sensible le couple nécessaire à l'entraînement du rotor, on a proposé d'augmenter le nombre d'ailettes comprises dans chaque "couronne" d'ailettes et donc de réduire l'épaisseur de ces ailettes.

Une telle formule a été présentée dans le brevet FRANCE n° 88 02125 de la demanderesse, formule permettant de réaliser des ailettes identiques particulièrement minces, rapprochées et nombreuses, leur épaisseur étant inférieure à 5 mm, leur écartement moyen étant inférieur à 10 mm et leur nombre étant supérieur à 24, et notamment égal à 64 pour chaque "couronne" considérée.

Cette formule permet d'améliorer l'évacuation des calories et donc le rendement à chaud du ralentisseur.

Mais elle suppose la mise en oeuvre d'un procédé de moulage de précision à modèle perdu qui est relativement onéreux.

L'invention a pour but, surtout, de remédier à cet inconvénient, c'est-à-dire d'obtenir de manière relativement économique un rotor présentant un nombre élevé d'ailettes particulièrement minces et rapprochées de façon à améliorer le refroidissement du ralentisseur correspondant, et donc le couple de freinage qu'il engendre.

A cet effet, les rotors du genre en question selon l'invention sont essentiellement caractérisés en ce que, entre le disque et la joue, en plus d'ailettes relativement épaisses, espacées et peu nombreuses venues de moulage avec le disque et la joue, une pluralité de plaquettes indépendantes thermiquement conductrices s'étendent parallèlement à l'axe du rotor, les tranches terminales axiales desquelles sont encastrées sur une petite profondeur dans respectivement les deux faces transversales en regard du disque et de la joue.

Dans des modes de réalisation préférés, on a recours en outre à l'une et/ou à l'autre des dispositions suivantes :
- les plaquettes sont inclinées en chacun de leurs points, sur les rayons du rotor qui passent en ces points, d'angles sensiblement égaux aux angles d'inclinaison, sur les rayons correspondants, des portions d'ailettes qui encadrent circonférentiellement ces plaquettes,
- chaque plaquette s'étend seulement sur une fraction de l'étendue radiale du disque,
- la fraction selon l'alinéa précédent est comprise entre le quart et la moitié, limites incluses,
- chaque plaquette présente une épaisseur constante,
- les plaquettes sont incurvées semblablement aux ailettes qui les encadrent circonférentiellement,
- chaque ailette est formée de plusieurs tronçons distincts,
- chaque ailette comprend un tronçon interne et un tronçon externe situés dans le prolongement l'un de l'autre,
- les plaquettes sont réparties de façon à former autour de l'axe du rotor des couronnes de plaquettes identiques, équidistantes et inclinées semblablement sur les rayons correspondants,
- dans un rotor selon les deux alinéas précédents, le nombre des couronnes de plaquettes concentriques est égal à trois, la couronne intérieure et la couronne extérieure sont toutes deux interrompues au niveau des tronçons d'ailettes qui traversent respectivement ces deux couronnes, et la couronne intermédiaire s'étend sur toute la périphérie du rotor en traversant les ailettes au niveau des intervalles compris entre leurs tronçons constitutifs,
- chaque plaquette est constituée par plusieurs feuilles accolées dont l'une au moins est constituée en un matériau bon conducteur thermique et dont une autre au moins est constituée en un matériau mécaniquement résistant.

Pour ce qui est du procédé de fabrication des rotors considérés, on procède avantageusement comme suit : on commence par fabriquer des noyaux en sable dans chacun desquels sont noyées plusieurs plaquettes, en leurs emplacements respectifs qu'elles sont destinées à occuper dans le rotor terminé, les tranches opposées, de ces plaquettes, destinées à être encastrées dans le disque et dans la joue, faisant saillie hors dudit noyau sur une longueur égale à la profondeur désirée d'encastrement, et on met en place ces noyaux dans un moule destiné à la fabrication du rotor avant coulée du matériau ferromagnétique liquide dans ce moule.

Pour ce qui est enfin des dispositifs de fabrication des noyaux ci-dessus, ceux-ci comprennent avantageusement :
- une boîte à noyau associée à un couvercle et à des moyens d'injection de sable, boîte dont le fond présente une forme identique à celle désirée pour la face, du disque du rotor terminé, délimitant l'un des compartiments de ce rotor disposé entre deux ailettes consécutives, ledit fond étant évidé par des gorges propres à recevoir les tranches en regard des plaquettes concernées,
- une plaque ajourée de façon à être traversée de manière quasi jointive par lesdites plaquettes et reposant initialement sur le fond de la boîte,
- et des poussoirs logés dans ce fond permettant de déplacer la plaque ajourée, le long des plaquettes, depuis le fond de la boîte jusqu'à la face intérieure du couvercle de cette boîte, après mise en place de chaque plaquette dans le logement constitué par une gorge et par le jour contigu de la plaque ajourée.

L'invention comprend, mises à part ces dispositions principales, certaines autres dispositions qui s'utilisent de préférence en même temps et dont il sera plus explicitement question ci-après.

Dans ce qui suit, l'on va décrire quelques modes de réalisation préférés de l'invention en se référant aux dessins ci-annexés d'une manière bien entendu non limitative.

Les figures 1 et 2, de ces dessins, montrent un rotor de ralentisseur électromagnétique établi conformément à l'invention, respectivement en vue partielle en bout selon la flèche I de la figure 2 et en demi-coupe axiale selon II-II, figure 1, le stator correspondant étant en outre représenté partiellement en spectre sur la figure 2.

Les figures 3 et 4 sont des schémas montrant des dispositifs de fabrication du rotor ci-dessus également conformes à l'invention.

Le mot "rotor" utilisé dans le présent texte désigne plus précisément chacun des sous-ensembles monoblocs 1 qui sont compris par l'ensemble rotorique d'axe X d'un ralentisseur électromagnétique ou à "courants de Foucault" et qui comportent un disque induit 2 en matériau ferromagnétique.

Comme on le sait, un tel disque 2 est solidarisé avec l'arbre 3 à ralentir, tel que l'arbre de transmission d'un véhicule, et il est monté de façon à pouvoir défiler devant le stator 4 du ralentisseur, ou plus précisément devant une couronne de pôles inducteurs 5 alternativement positifs et négatifs faisant partie de ce stator, avec interposition d'un entrefer E, le disque 2 en question étant alors le siège de courants de Foucault qui se traduisent par un freinage et un échauffement de ce disque.

L'ensemble rotorique du ralentisseur comprend, en plus du rotor ou sous-ensemble défini ci-dessus, lequel est unique ou de préférence dédoublé symétriquement de part et d'autre du stator, une pièce intermédiaire 6 de révolution autour de l'axe X, telle qu'un manchon, moyeu ou plateau, elle-même fixée, généralement par boulonnage, sur l'arbre 3 à ralentir, chaque "rotor" 1 ici considéré étant de son côté fixé par boulonnage sur cette pièce intermédiaire.

D'une façon encore connue en soi, chaque rotor 1 comprend, en plus du disque 2, et venues de moulage avec ce disque:
- une bague de fixation 7 de diamètre moyen inférieur au diamètre intérieur du disque 2, percée d'alésages axiaux 8, filetés ou non, destinés à recevoir des boulons de fixation de cette bague sur la pièce intermédiaire 6,
- une couronne d'ailettes de ventilation 9 faisant saillie sur la face, du disque 2, opposée à sa face destinée à délimiter l'entrefer E,
- une couronne de bras 10 prolongeant vers l'axe X certaines des ailettes 9 et raccordés eux-mêmes à la bague 7,
- et une jante ou joue annulaire 11 s'étendant en général parallèlement au disque et reliant les crêtes des ailettes 9 de façon à former entre ces ailettes, le disque et la joue des canaux de guidage 12 pour l'air de ventilation.

Chaque ailette 9 est délimitée par deux faces parallèles ou sensiblement telles, inclinées sur les rayons correspondants vers l'arrière par rapport au sens de rotation R du rotor, si l'on considère les rayons croissants, et incurvées de façon à présenter leurs concavités vers l'arrière, l'angle d'inclinaison formé par chaque face d'ailette en chacun de ses points sur le rayon correspondant étant supérieur à 40 degrés et notamment de l'ordre de 50 à 60 degrés.

Chaque ailette 9 pourrait s'étendre d'un seul tenant continu sur toute son étendue comprise axialement entre le disque 2 et la joue 11.

Mais dans le mode de réalisation préféré illustré, chaque ailette 9 est constituée par un tronçon interne 9₁ et un tronçon externe 9₂ disposés dans le prolongement l'un de l'autre et séparés l'un de l'autre par un intervalle 9₃ s'étendant sur le tiers de la largeur radiale du disque, et même un peu plus.

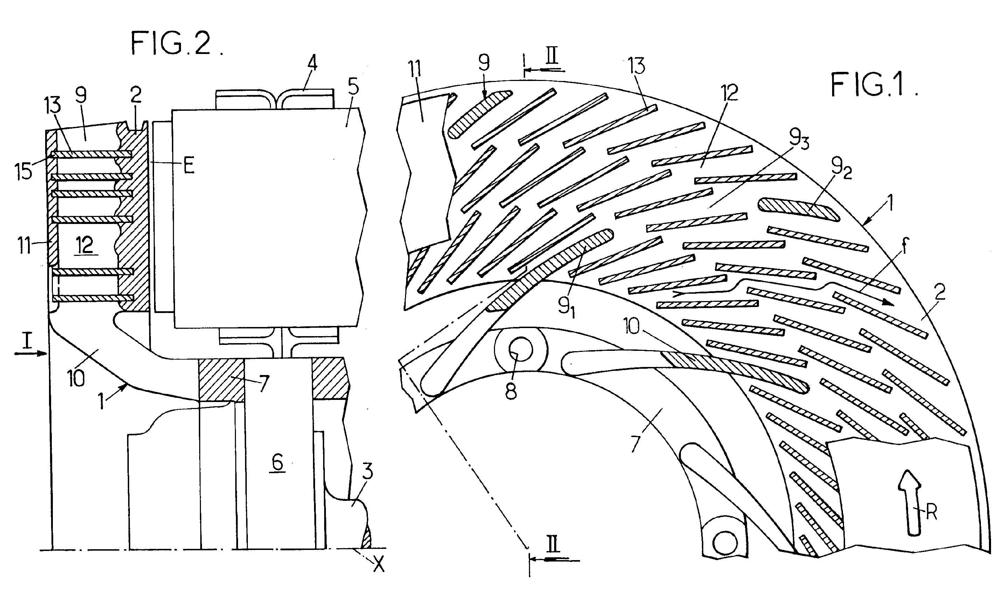

Les bras 10 sont de préférence axialement coudés, comme dans le mode de réalisation illustré sur la figure 2, de façon à "rentrer" axialement la bague 7 vers l'intérieur du stator et à réduire ainsi l'encombrement axial de la portion centrale du rotor.

Mais lesdits bras 10 pourraient également être "droits", leurs lignes moyennes demeurant alors sensiblement contenues dans un même plan transversal.

Le nombre des bras 10 de chaque rotor est avantageusement égal à huit.

C'est l'évacuation des calories engendrées dans le disque 2 par la création des courants de Foucault lors du fonctionnement du ralentisseur que la présente invention se propose d'améliorer.

A cet effet on garnit les volumes intérieurs des couloirs 12 par une pluralité de plaquettes 13 s'étendant parallèlement à l'axe X et dont les deux extrémités axiales sont encastrées ou plantées respectivement dans les deux faces en regard du disque 2 et de la joue 11.

Ces plaquettes 13 sont à la fois thermiquement conductrices et suffisamment résistantes aux déformations pour demeurer solidement en place lors d'un service prolongé, malgré notamment les échauffements, l'application sur elles de la force centrifuge, les agressions extérieures (boues, cailloux...).

Dans un mode de réalisation particulièrement avantageux, lesdites plaquettes 13 sont composées par une feuille de cuivre prise en sandwich entre deux feuilles d'acier.

Les plaquettes 13 sont inclinées en chacun de leurs points, sur les rayons du rotor qui passent en ces points, d'angles sensiblement égaux aux angles d'inclinaison, sur les rayons correspondants, des portions d'ailettes qui encadrent circonférentiellement des plaquettes.

Les angles en question sont en général de l'ordre de 45°.

Chaque plaquette 13 s'étend avantageusement sur une fraction seulement de l'étendue radiale du disque, ladite fraction étant notamment de l'ordre du tiers, mais pouvant également être avec avantage de l'ordre du quart ou de la moitié.

Chaque plaquette 13 présente avantageusement une épaisseur constante.

Cette épaisseur est généralement inférieure à 5 mm, étant par exemple égale à 3 ou 4 mm.

Les profondeurs d'encastrement de chaque plaquette respectivement dans le disque 2 et dans la joue 11 sont avantageusement de l'ordre de 5 à 10 mm pour la première et de l'ordre de 2 à 5 mm pour la seconde.

Chaque plaquette peut présenter une surface moyenne plane, comme illustré, ce qui simplifie la fabrication, mais, dans des modes de réalisations avantageux, cette surface moyenne est légèrement incurvée, semblablement aux surfaces moyennes des ailettes 9 qui encadrent circonférentiellement ces plaquettes.

Les plaquettes 13 sont avantageusement réparties de façon à former autour de l'axe du rotor des couronnes de plaquettes identiques, équidistantes et inclinées semblablement sur les rayons correspondants.

Dans le mode de réalisation ici illustré, le nombre de ces couronnes est égal à trois, la couronne intérieure est interrompue au niveau des tronçons internes 9₁ des ailettes 9, la couronne extérieure est interrompue au niveau des tronçons externes 9₂ desdites ailettes et la couronne intermédiaire, disposée au niveau radial des intervalles 9₃, s'étend de façon régulière sur toute sa longueur, certaines de ses plaquettes constitutives 13 pouvant même être disposées au moins en partie dans lesdits intervalles.

Lorsque les plaquettes forment plusieurs couronnes qui s'entourent mutuellement, les nombres des plaquettes dans les différentes couronnes peuvent être différents.

C'est ainsi que, dans le mode de réalisation illustré, comprenant huit ailettes 9 angulairement décalées de 45° et trois couronnes de plaquettes, les nombres de plaquettes, de chaque couronne, comprises dans un même couloir 12, c'est-à-dire entre deux ailettes 9 successives, sont de 6 pour la couronne inférieure et la couronne extérieure et de 7 pour la couronne intermédiaire.

Comme visible sur la figure 1, certaines plaquettes sont décalées angulairement par rapport aux positions qu'elles devraient occuper pour se trouver dans le prolongement des plaquettes voisines.

C'est ainsi que certains des filets d'air de refroidissement f ne s'étendent pas selon un simple arc de cercle, mais selon un trajet en zigzag.

Ces trajets tourmentés sont avantageux en ce qu'il leur correspond une certaine turbulence dans les filets d'air concernés, favorable aux échanges thermiques.

Le rotor garni de plaquettes "insérées" ou "encastrées" tel que décrit ci-dessus peut être fabriqué de toute manière désirable.

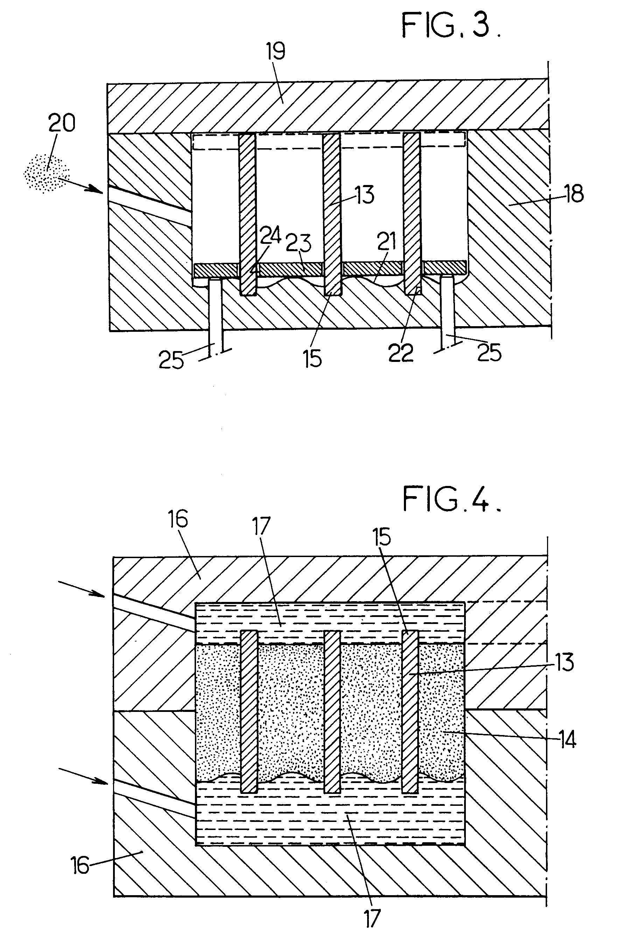

Selon un mode de réalisation avantageux, on commence par fabriquer des noyaux 14 en sable (figure 4) dans chacun desquels sont noyées plusieurs plaquettes 13, en leurs emplacements respectifs qu'elles sont destinées à occuper dans le rotor terminé, les tranches opposées 15, de ces plaquettes, qui sont destinées à être encastrées dans le disque et dans la joue, faisant saillie hors dudit noyau 14 sur une longueur égale à la profondeur désirée d'encastrement.

Ces noyaux 14 hérissés de tranches 15 sont ensuite placés dans le moule 16 destiné à la fabrication du rotor avant coulée dans ce moule du matériau ferromagnétique liquide 17 destiné à constituer ledit rotor.

Lors de cette coulée, le matériau 17 enrobe complètement les tranches 15 et, après durcissement dudit matériau, on dégage la pièce ainsi moulée hors du moule 16 et on élimine le sable constitutif du noyau, notamment en appliquant sur l'ensemble des secousses à l'aide d'un tapis vibrant, puis en nettoyant la pièce par grenaillage.

Pour fabriquer le noyau 14 lui-même chargé de plaquettes 13 à tranches 15 en saillie, on a recours avantageusement à une boîte à noyau 18 (figure 3) associée à un couvercle 19 et à des moyens d'injection 20 de sable.

Le fond 21 de cette boîte présente une forme identique à celle désirée pour la face du disque 2 du rotor terminé, qui délimite l'un des compartiments de ce rotor disposé angulairement entre deux ailettes 9 consécutives, ledit fond 21 étant évidé par des gorges 22 propres à recevoir les tranches en regard 15 des plaquettes 13 concernées.

Une plaque 23 ajourée en 24 de façon à être traversée avec un très faible jeu par lesdites plaquettes 13 repose initialement sur le fond 21.

La distance, comptée perpendiculairement à la plaque 23, entre les fonds des gorges 22 et la face plane intérieure du couvercle 19, est égale à la dimension, de chaque plaquette 13, destinée à être orientée parallèlement à l'axe X du rotor terminé.

Des poussoirs 25 logés dans le fond 21 permettent de déplacer la plaque ajourée 23, le long des plaquettes 13, depuis ce fond 21 jusqu'à la face intérieure du couvercle 19, après mise en place de chaque plaquette 13 dans un logement constitué par une gorge 22 et par le jour contigu 24 de la plaque 23, et fermeture consécutive du couvercle 19.

Cette dernière position de la plaque 23 est représentée en traits interrompus sur la figure 3.

C'est à ce stade que l'on injecte dans la boîte à noyau le sable destiné à constituer le noyau 14 autour des portions médianes des plaquettes 13, ce sable étant mélangé à des produits, bien connus en matière de moulage, destinés à le durcir en fin d'injection.

Comme bien visible sur la figure 3, les seules portions, des plaquettes 13, qui font saillie en dehors du noyau en sable considéré sont :
- d'une part, les tranches 15 introduites dans les gorges 22 du fond 21,
- et, d'autre part, les tranches opposées 15 qui sont logées, contre la face intérieure du couvercle 19, dans les jours de la plaque ajourée 23 alors mise en contact avec ladite face.

On donne respectivement à la profondeur des gorges 22 et à l'épaisseur de la plaque 24 des valeurs égales aux profondeurs désirées d'encastrement des plaquettes 13, d'une part, dans le disque 2 du rotor final et, d'autre part, dans la joue 11 de ce rotor.

Après solidification du sable, il suffit d'ouvrir le couvercle 19 pour pouvoir dégager successivement la plaque 23, puis le noyau en sable 14 portant les plaquettes 13 avec leurs tranches 15 en saillie.

En suite de quoi, et quel que soit le mode de réalisation adopté, on dispose finalement d'un rotor dont la constitution et les avantages (notamment la nette amélioration du refroidissement et, par suite, l'accroissement considérable du couple de ralentissement à chaud) résultent suffisamment de ce qui précède.

## Revendications

1. Rotor induit de ralentisseur électromagnétique, comprenant au moins un disque (2) prolongé axialement sur l'une de ses faces par une pluralité d'ailettes (9), chaque ailette étant délimitée par deux faces parallèles ou sensiblement telles, inclinées sur les rayons correspondants du rotor, les crêtes de ces ailettes étant raccordées entre elles par une joue annulaire (11) et l'ensemble du disque, des ailettes et de la joue étant constitué en un seul bloc moulé en matériau ferromagnétique, caractérisé en ce que, entre le disque (2) et la joue (11), entre les ailettes (9) venues de moulage avec le disque et la joue, une pluralité de plaquettes indépendantes (13) thermiquement conductrices s'étendent parallèlement à l'axe du rotor, les tranches terminales axiales (15) desquelles sont encastrées sur une petite profondeur dans respectivement les deux faces transversales en regard du disque et de la joue.

2. Rotor selon la revendication 1, caractérisé en ce que les plaquettes (13) sont inclinées en chacun de leurs points, sur les rayons du rotor qui passent en ces points, d'angles sensiblement égaux aux angles d'inclinaison, sur les rayons correspondants, des portions d'ailettes (9) qui encadrent circonférentiellement ces plaquettes.

3. Rotor selon l'une quelconque des précédentes revendications, caractérisé en ce que chaque plaquette (13) s'étend seulement sur une fraction de l'étendue radiale du disque (2).

4. Rotor selon la revendication 3, caractérisé en ce que les plaquettes (13) sont réparties de façon à former autour de l'axe du rotor des couronnes de plaquettes identiques, équidistantes et inclinées semblablement sur les rayons correspondants.

5. Rotor selon l'une quelconque des précédentes revendications, caractérisé en ce que chaque ailette (9) comprend un tronçon interne (9₁) et un tronçon externe (9₂) situés dans le prolongement l'un de l'autre.

6. Rotor selon les revendications 4 et 5, caractérisé en ce que le nombre des couronnes de plaquettes concentriques (13) est égal à trois, en ce que la couronne intérieure et la couronne extérieure sont toutes deux interrompues au niveau des tronçons d'ailettes (9₁,9₂) qui traversent respectivement ces deux couronnes, et en ce que la couronne intermédiaire s'étend sur toute la périphérie du rotor en traversant les ailettes au niveau des intervalles (9₃) compris entre leurs tronçons constitutifs.

7. Rotor selon l'une quelconque des précédentes revendications, caractérisé en ce que chaque plaquette (13) est constituée par plusieurs feuilles accolées dont l'une au moins est constituée en un matériau bon conducteur thermique et dont une autre au moins est constituée en un matériau mécaniquement résistant.

8. Procédé de fabrication d'un rotor selon l'une quelconque des revendications précédentes, caractérisé en ce que l'on commence par fabriquer des noyaux en sable (14) dans chacun desquels sont noyées plusieurs plaquettes (13), en leurs emplacements respectifs qu'elles sont destinées à occuper dans le rotor terminé, les tranches opposées (15), de ces plaquettes, destinées à être encastrées dans le disque (2) et dans la joue (11), faisant saillie hors dudit noyau sur une longueur égale à la profondeur désirée d'encastrement, et en ce que l'on met en place ces noyaux dans un moule (16) destiné à la fabrication du rotor avant coulée du matériau ferromagnétique liquide (17) dans ce moule.

9. Dispositif pour fabriquer des noyaux (14) mis en oeuvre selon la revendication 8, caractérisé par une boîte à noyau (18) associée à un couvercle (19) et à des moyens (20) d'injection de sable, boîte dont le fond (21) présente une forme identique à celle désirée pour la face, du disque (2) du rotor terminé, délimitant l'un des compartiments de ce rotor disposé entre deux ailettes consécutives (9), ledit fond étant évidé par des gorges (22) propres à recevoir les tranches en regard (15) des plaquettes concernées (13), une plaque ajourée (23) de façon à être traversée de manière quasi jointive par lesdites plaquettes et reposant initialement sur le fond de la boîte, et des poussoirs (25) logés dans ce fond permettant de déplacer la plaque ajourée, le long des plaquettes, depuis le fond de la boîte jusqu'à la face intérieure du couvercle de cette boîte, après mise en place de chaque plaquette dans le logement constitué par une gorge (22) et par le jour (24) contigu de la plaque ajourée (23).

## Patentansprüche

1. Anker eines elektromagnetischen Verzögerers, der aus wenigstens einer Scheibe (2) besteht, die auf einer ihrer Oberflächen, durch eine Vielzahl von Flügeln (9) verlängert ist, wobei jeder Flügel von zwei parallelen oder annähernd parallelen Oberflächen begrenzt wird, die zu den entsprechenden Radien des Ankers geneigt verlaufen, die Kämme der Flügel miteinander durch eine ringförmige Wange (11) miteinander verbunden sind und die Scheibe, die Flügel und die Wange aus einem einzigen gegossenen Block aus ferromagnetischem Material bestehen, dadurch gekennzeichnet, daß sich zwischen der Scheibe (2) und der Wange (11) zwischen den Flügeln (9), die zusammen mit der Scheibe und der Wange gegossen sind, parallel zur Achse der Anker eine Vielzahl von unabhängigen Plättchen (13) aus wärmeleitendem Material erstreckt, deren axiale Endabschnitte (15) über eine geringe Tiefe in jeweils die beiden quer verlaufenden Oberflächen der scheibe bzw, der Wange eingespannt sind.

2. Anker nach Anspruch 1, dadurch gekennzeichnet, daß die Plättchen (13) an allen ihren Punkten zu den Radien des Ankers, die sie an diesen Stellen schneiden, unter Winkeln geneigt verlaufen, die im wesentlichen die gleiche Größe haben wie die Neigungswinkel der diese Plättchen an ihrem Umfang umgebenden Abschnitte von Flügel (9) zu den entsprechenden Radien.

3. Anker nach einem der vorhergehenden Ansprüche, dadurch gekennzeichnet, daß sich jedes Plättchen (13) nur über einen Teil der radialen Ausdehnung der Scheibe (2) erstreckt.

4. Anker nach Anspruch 3, dadurch gekennzeichnet, daß die Plättchen (13) derart verteilt angeordnet sind, daß sie um die Achse des Ankers Plattenkränze bilden, die identisch sind, den gleichen Abstand voneinander haben und zu den entsprechenden Radien mit einer ähnlichen Neigung verlaufen.

5. Anker nach einem der vorhergehenden Ansprüche, dadurch gekennzeichnet, daß jeder Flügel (9) aus einem inneren Teilstück (9₁) und einem äußeren Teilstück (9₂) besteht, die in ihrer gegenseitigen Verlängerung angeordnet sind.

6. Anker nach den Ansprüchen 4 und 5, dadurch gekennzeichnet, daß drei konzentrische Kränze von Plättchen (13) vorgesehen sind und daß sowohl der innere als auch der äußere Kranz in Höhe der Teilstücke (9₁, 9₂) von Flügel unterbrochen ist, die die beiden jeweiligen Kränze durchdringen und daß der dazwischenliegende Kranz sich über den gesamten Umfang des Ankers erstreckt und die Flügel in Höhe von Zwischenräumen (9₃) durchdringt, die zwischen den beiden Teilstücken liegen, aus denen die Flügel bestehen.

7. Anker nach einem der vorhergehenden Ansprüche, dadurch gekennzeichnet, daß jedes Plättchen (13) aus mehreren zusammengefügten Folien besteht, von denen wenigstens eine aus einem Material mit guter Wärmeleitfähigkeit und wenigstens eine andere aus einem mechanisch widerstandfähigen Material besteht.

8. Verfahren zur Herstellung eines Ankers nach einem der vorhergehenden Ansprüche, dadurch gekennzeichnet, daß zunächst Sandkerne (14) hergestellt werden, in die mehrere Plättchen (13) an den Stellen eingebettet sind, die sie in dem fertigen Anker einnehmen sollen, wobei entgegengesetzt liegende Abschnitte (15) der Plättchen, die in die Scheibe (2) bzw, in die Wange (11) eingespannt werden sollen, gegenüber dem Kern über eine Länge vorstehen, die der gewünschten Einspanntiefe entspricht und daß diese Kerne in eine zur Herstellung des Ankers bestimmte Form (16) einlegt werden bevor das flüssige ferromagnetische Material (17) in diese Form eingegossen wird.

9. Vorrichtung zur Herstellung von Kernen (14), die gemäß Anspruch 8 benutzt werden, gekennzeichnet durch einen Kernkasten (18), der mit einem Deckel (19) und mit Einrichtungen (20) zum Einspritzen von Sand versehen ist und dessen Boden (21) eine Gestalt hat, die mit der gewünschten Oberfläche der Scheibe (2) des fertigen Ankers identisch ist, die einen der Abschnitte des Ankers, die zwischen zwei aufeinanderfolgenden Flügeln (9) angeordnet sind, begrenzt, wobei in dem Boden Rinnen (22) zur Aufnahme der Endabschnitte (15) der betreffenden Plättchen (13) ausgenommen sind, durch eine Platte (23) die derart durchbrochen ist, daß sie nahezu dicht von den Plättchen durchquert wird und die anfänglich auf dem Boden des Gefäßes aufliegt sowie durch Stößel (25), die in dem Boden angeordnetsind und mit denen die durchbrochene Platte längs der Plättchen von dem Boden des Gefäßes aus bis zu der Innenfläche des Deckels des Gefäßes verschoben werden kann, nachdem die einzelnen Plättchen in dem Lager angeordnet sind, das von einer Rinne (22) und einem zugehörigen Schlitz (24) in der durchbrochenen Platte (23) gebildet wird.

## Claims

1. A rotor armature of an electromagnetic retarder, comprising at least one disk (2) axially prolonged over one of its faces by a plurality of fins (9), each fin being delimited by two faces which are parallel or substantially so, inclined with the corresponding radii of the rotor, the tips of these fins being connected together by an annular flange (11) and the assembly of the disk, of the fins and of the flange being formed all in a single piece molded from a ferromagnetic material, characterized in that, between the disk (2) and the flange (11), between the fins (9) molded in one piece with the disk and the flange, a plurality of thermally conductive independent inserts (13) extend parallel to the axis of the rotor, whose axial end edges (15) are embedded to a small depth in respectively the two mutually opposite transverse faces of the disk and the flange.

2. The rotor according to claim 1, characterized in that the inserts (13) are inclined at each of their points, with the radii of the rotor which pass through these points, at angles substantially equal to the angles of inclination, with the corresponding radii, of the fin portions (9) which circumferentially flank these inserts.

3. The rotor according to any one of the preceding claims, characterized in that each insert (13) extends only over a fraction of the radial extent of the disk (2).

4. The rotor according to claim 3, characterized in that the inserts (13) are distributed so as to form, around the axis of the rotor, rings of inserts which are identical, equidistant and similarly inclined with the corresponding radii.

5. The rotor according to any one of the preceding claims, characterized in that each fin (9) comprises an internal section (9₁) and an external section (9₂) which are each located in the prolongation of the other.

6. The rotor according to claims 4 and 5, characterized in that the number of concentric rings of inserts (13) is equal to three, in that the inner ring and the outer ring are both interrupted at the position of the fin sections (9₁,9₂) which traverse respectively both these rings, and in that the intermediate ring is extended over the entire periphery of the rotor by traversing the fins at the position of the gaps (9₃) between their constituent sections.

7. The rotor according to any one of the preceding claims, characterized in that each insert (13) is formed by a plurality of attached sheets, of which at least one is formed from a material which is a good thermal conductor and at least one other is formed from a mechanically strong material.

8. A process for manufacturing a rotor according to any one of the preceding claims, characterized in that sand cores (14) are first manufactured, into each of which a plurality of inserts (13) are embedded in their respective locations which they are intended to occupy in the completed rotor, the opposite edges (15), of these inserts, intended to be embedded in the disk (2) and in the flange (11), projecting out of said core over a length equal to the desired depth of embedding, and in that these cores are placed in a mold (16) intended for manufacturing the rotor before casting into this mold the liquid ferromagnetic material (17).

9. A device for manufacturing cores (14) operated according to claim 8, characterized by a core box (18) associated with a cover (19) and with sand injection means (20), box whose bottom (21) has a shape identical to that desired for the face, of the disk (2) of the completed rotor, which delimits one of the compartments of this rotor, disposed between two consecutive fins (9), said bottom being recessed by grooves (22) able to receive the opposite edges (15) of the inserts in question (13), a plate (23) opened so as to be traversed quasi-contiguously by said inserts and initially lying on the bottom of the box, and rammers (25) housed in this bottom making it possible to move the opened plate along the inserts from the bottom of the box to the inner face of the cover of this box, after installing each insert in the housing formed by a groove (22) and by the contiguous opening (24) of the opened plate (23).
